# EUROPEAN PATENT APPLICATION

(11) **EP 4 830 532 A1**
(43) Date of publication of application: **28.10.2026**
(21) Application number: 24906830.5
(22) Date of filing: 29.08.2024
(51) Int. Cl.: A23L 2/02, A23L 2/00, A23L 2/52

(54) **BEVERAGE WITH ENHANCED RICHNESS, METHOD FOR PRODUCING SAME, AND METHOD FOR ENHANCING RICHNESS OF BEVERAGE**

(30) Priority: 22.12.2023 JP 2023217352
(71) Applicant: Kirin Beverage Company, Limited, Tokyo 101-8645 (JP)
(72) Inventor: KINOSHITA, Akiko, Tokyo 101-8645 (JP)
(74) Representative: Hoffmann Eitle
(86) International application number: PCT/JP2024/031076
(87) International publication number: WO 2025/134440

(57) **Abstract**

A beverage contains dead bacteria of beneficial bacteria and at least one of fruit juice and vegetable juice and has a dead bacteria concentration of the beneficial bacteria of 5 × 10⁸/L or more.

## Description

### TECHNICAL FIELD

The present disclosure relates to a beverage with enhanced aromatic richness, a method of producing the same, and a method of enhancing aromatic richness of a beverage. More specifically, the present disclosure relates to beverages that contain at least one of fruit juice and vegetable juice and the like.

### BACKGROUND

Beverages that contain fruit juice and/or vegetable juice are widely used as beverages for simple and efficient consumption of nutrients such as dietary fiber and various vitamins. In some instances, it is desirable for these beverages to have excellent flavor similar to that when actually ingesting raw fruits and vegetables from a perspective of palatability. Deterioration of such flavor may be an issue, particularly upon heat sterilization or long-term storage.

In order to compensate for this deterioration of flavor, Patent Literature (PTL) 1, for example, discloses a grape juice-containing beverage in which the strength of taste is improved while also maintaining or improving clean finish through the inclusion of specific amounts of hexyl acetate and acetic acid.

As another example, PTL 2 discloses a method of producing a fruit/vegetable beverage including a step of inoculating a Lactobacillus casei probiotic, in a specific ratio, into a fruit/vegetable juice that has been obtained by uniformly stirring a fruit/vegetable, pure water, and glucose or a sugar substitute in a specific ratio and that has been sterilized and subsequently cooled, and performing fermentation with the Lactobacillus casei probiotic under specific conditions. PTL 2 reports that this fruit/vegetable beverage has excellent flavor and improved nutritional balance as a result of fermentation with the probiotic.

### CITATION LIST

### Patent Literature

PTL 1: JP 2023-094907 A
PTL 2: JP 2021-136984 A

### SUMMARY

### (Technical Problem)

However, there is room for further improvement in the conventional methods described above in terms of enhancing aromatic richness of a beverage that contains at least one of fruit juice and vegetable juice. Moreover, since fermentation by a probiotic is essential in the method described in PTL 2, the method requires increased time and equipment for this fermentation and leaves room for improvement in terms of productivity.

Accordingly, an object of the present disclosure is to provide a beverage with enhanced aromatic richness that contains at least one of fruit juice and vegetable juice.

### (Solution to Problem)

As a result of diligent studies conducted with the aim of solving the problems described above, the inventors discovered that among beneficial bacteria, not only live bacteria, but also dead bacteria have a flavor enhancement effect in food. Upon conducting further research, the inventors reached a new finding that by adding dead bacteria of beneficial bacteria in not less than a certain concentration to a beverage that contains at least one of fruit juice and vegetable juice, it is possible to enhance the aromatic richness of the beverage, and, in this manner, completed the present disclosure.

Specifically, with the aim of advantageously solving the problems described above, [1] a presently disclosed beverage comprises: dead bacteria of beneficial bacteria; and at least one of fruit juice and vegetable juice, wherein a dead bacteria concentration of the beneficial bacteria is 5 × 10⁸/L or more. When the dead bacteria concentration of the beneficial bacteria is not less than the lower limit set forth above, aromatic richness of the beverage can be improved.
**[2]** In the beverage according to the foregoing [1], the dead bacteria concentration of the beneficial bacteria is preferably 4,000 × 10⁸/L or less. When the dead bacteria concentration of the beneficial bacteria is not more than the upper limit set forth above, odor originating from the beneficial bacteria can be suppressed.
[3] In the beverage according to the foregoing [1] or [2], the beneficial bacteria are preferably one type or two or more types selected from the group consisting of Lactobacillus bacteria and Lactococcus bacteria.
[4] In the beverage according to any one of the foregoing [1] to [3], the beneficial bacteria are preferably one type or two or more types selected from the group consisting of Lactobacillus rhamnosus CRL1505, Lactococcus lactis subsp. lactis JCM5805, and Lactobacillus paracasei KW3110.
[5] In the beverage according to any one of the foregoing [1] to [4], the fruit juice preferably includes at least one of apple juice, orange juice, and grape juice, and the vegetable juice preferably includes at least one of tomato juice and carrot juice.
[6] The beverage according to any one of the foregoing [1] to [5] preferably further comprises a non-aqueous solvent, wherein a concentration of the non-aqueous solvent is 1 ppm or more. When the concentration of a non-aqueous solvent is 1 ppm or more, aromatic richness of the beverage can be further improved. Note that in the present specification, the units "ppm" as used in the present disclosure have the same meaning as "mg/L".
[7] In the beverage according to the foregoing [6], a value of X/Y, given that the concentration of the non-aqueous solvent is taken to be X ppm and the dead bacteria concentration of the beneficial bacteria is taken to be Y × 10⁸/L, is preferably not less than 0.10 and not more than 500.
[8] In the beverage according to the foregoing [6] or [7], the non-aqueous solvent preferably includes at least one of nitrous oxide, acetone, ethanol, glycerin, ethyl acetate, methyl acetate, diethyl ether, cyclohexane, dichloromethane, 1,1,2-trichloroethene, edible oil or fat, 1,1,1,2-tetrafluoroethane, 1-butanol, 2-butanol, 2-butanone, butane, 1-propanol, 2-propanol, propane, propylene glycol, hexane, and methanol. When the non-aqueous solvent includes at least one of the non-aqueous solvents set forth above, aromatic richness of the beverage can be further improved.
[9] In the beverage according to any one of the foregoing [1] to [8], the fruit juice and/or vegetable juice preferably has a sugar content of 0.5°Brix or more. When the sugar content of the fruit juice and/or vegetable juice is not less than the lower limit set forth above, aromatic richness of the beverage can be even further improved.
[10] The beverage according to any one of the foregoing [1] to [9] is preferably a packaged beverage. When the beverage is a packaged beverage, this beverage has excellent ease of distribution.
[11] The beverage according to any one of the foregoing [1] to [10] is preferably for normal temperature distribution. In a case in which the beverage is for normal temperature distribution, it is possible to suppress the development of deteriorated off-aroma and reduction of aromatic richness even when deterioration arises during storage, depending on the storage conditions, and to achieve a greater effect.
[12] Moreover, a presently disclosed method of producing a beverage is a method of producing a beverage that contains dead bacteria of beneficial bacteria and at least one of fruit juice and vegetable juice, the method comprising a step of adjusting a dead bacteria concentration of the beneficial bacteria in the beverage to 5 × 10⁸/L or more in blending of the at least one of fruit juice and vegetable juice and the dead beneficial bacteria. Through this production method, it is possible to provide a beverage with enhanced aromatic richness that contains at least one of fruit juice and vegetable juice.
[13] In the production method according to the foregoing [12], the at least one of fruit juice and vegetable juice that is blended in the step preferably has a sugar content of 0.5°Brix or more. This is because it is possible to provide a beverage having even better aromatic richness.
[14] Furthermore, a presently disclosed method of enhancing aromatic richness of a beverage is a method of enhancing aromatic richness of a beverage that contains dead bacteria of beneficial bacteria and at least one of fruit juice and vegetable juice, the method comprising adjusting a dead bacteria concentration of the beneficial bacteria in the beverage to 5 × 10⁸/L or more in blending of the at least one of fruit juice and vegetable juice and the dead bacteria of the beneficial bacteria. Through this enhancement method, it is possible to provide a beverage with enhanced aromatic richness that contains at least one of fruit juice and vegetable juice.

### (Advantageous Effect)

According to the present disclosure, it is possible to provide a beverage with enhanced aromatic richness that contains at least one of fruit juice and vegetable juice.

### DETAILED DESCRIPTION

### (Beverage)

The presently disclosed beverage contains dead bacteria of beneficial bacteria and at least one of fruit juice and vegetable juice and has a dead beneficial bacteria concentration of 5 × 10⁸/L or more. According to the present disclosure, it is possible to enhance aromatic richness of the beverage. Although the mechanism by which aromatic richness of the beverage improves according to the present disclosure is not clear, it is presumed that through the inclusion of dead bacteria of beneficial bacteria in a concentration not less than the lower limit set forth above, the flavor of the dead beneficial bacteria intensifies the flavor of the fruit juice or vegetable juice that is contained in the beverage and imparts an impression of aromatic richness during drinking of the beverage. Through the effect of the dead beneficial bacteria described above, aromatic richness of the beverage can be enhanced without accompaniment of a reaction such as fermentation according to the present disclosure. Consequently, the beverage can be produced with high productivity according to the present disclosure, without large scale equipment or time necessitated by fermentation. The presently disclosed beverage may be a beverage that does not contain fermented milk, and thus may, in other words, be a non-yogurt beverage. Moreover, the presently disclosed beverage may be a beverage that does not contain sea salt or potassium gluconate. When the presently disclosed beverage is a non-yogurt beverage, aromatic richness of the beverage is not impaired by the distinctive flavor of yogurt. Moreover, when the presently disclosed beverage is a beverage that does not contain sea salt or potassium gluconate, it is possible to provide a beverage with little saltiness.

The term "aromatic richness" as used in the present specification refers to the intensity of fruit juice, intensity of vegetable juice, vegetable character, fruitiness, vegetable flavor, fruit flavor, complexity of flavor, etc. that is experienced when drinking the beverage.

The term "odor originating from beneficial bacteria" as used in the present specification refers to a characteristic odor originating from the addition of beneficial bacteria.

In the present disclosure, dead bacteria of beneficial bacteria are used. No specific limitations are placed on the beneficial bacteria, and examples thereof include Oenococcus bacteria, Bifidobacterium bacteria, Weissella bacteria, Tetragenococcus bacteria, Lactococcus bacteria, Leuconostoc bacteria, Pediococcus bacteria, Streptococcus bacteria, Enterococcus bacteria, Lactobacillus bacteria, acetic acid bacteria, and Bacillus bacteria.

Note that the term "Lactobacillus bacteria" as used in the present disclosure encompasses bacteria that were classified as Lactobacillus prior to the Lactobacillus reclassification. For example, "Lactobacillus bacteria" encompasses bacteria that, in accompaniment to the Lactobacillus reclassification, were newly classified as Acetilactobacillus, Agrilactobacillus, Amylolactobacillus, Apilactobacillus, Bombilactobacillus, Companilactobacillus, Dellaglioa, Fructilactobacillus, Furfurilactobacillus, Holzapfelia, Lacticaseibacillus, Lactiplantibacillus, Lapidilactobacillus, Latilactobacillus, Lentilactobacillus, Levilactobacillus, Ligilactobacillus, Limosilactobacillus, Liquorilactobacillus, Loigolactobacillus, Paralactobacillus, Paucilactobacillus, Schleiferilactobacillus, Secundilactobacillus, and so forth.

Of the examples given above, Oenococcus bacteria, Bifidobacterium bacteria, Lentilactobacillus bacteria, Weissella bacteria, Tetragenococcus bacteria, Lactococcus bacteria, Leuconostoc bacteria, Pediococcus bacteria, Enterococcus bacteria, Lactobacillus bacteria, and Lactiplantibacillus bacteria are preferable as the beneficial bacteria. Moreover, from a viewpoint of further enhancing aromatic richness of the beverage, it is more preferable that one type or two or more types selected from the group consisting of Lactobacillus bacteria and Lactococcus bacteria are included as the beneficial bacteria.

The Oenococcus bacteria mentioned above may be Oenococcus oeni or the like, for example. Specific examples of Oenococcus bacteria include Oenococcus oeni JCM6125.

The Bifidobacterium bacteria mentioned above may be Bifidobacterium animalis subsp. lactis, Bifidobacterium longum subsp. infantis, or the like, for example. Specific examples of Bifidobacterium bacteria include Bifidobacterium animalis subsp. lactis JCM10602 and Bifidobacterium longum subsp. infantis JCM1222.

The Weissella bacteria mentioned above may be Weissella paramesenteroides, Weissella viridescens, or the like, for example. Specific examples of Weissella bacteria include Weissella paramesenteroides JCM9890 and Weissella viridescens JCM1174.

The Tetragenococcus bacteria mentioned above may be Tetragenococcus halophilus or the like, for example. Specific examples of Tetragenococcus bacteria include Tetragenococcus halophilus NRIC0098.

The Lactococcus bacteria mentioned above may be Lactococcus lactis, Lactococcus lactis subsp. lactis, Lactococcus garvieae, Lactococcus lactis subsp. cremoris, Lactococcus lactis subsp. hordniae, Lactococcus plantarum, or the like, for example.

Specific examples of Lactococcus bacteria include Lactococcus lactis subsp. lactis JCM5805, Lactococcus lactis subsp. lactis NBRC12007, Lactococcus lactis subsp. lactis NRIC1150, Lactococcus lactis subsp. lactis JCM20101, Lactococcus lactis subsp. lactis JCM7638, Lactococcus lactis subsp. lactis ATCC11454, Lactococcus garvieae NBRC100934, Lactococcus lactis subsp. cremoris JCM16167, Lactococcus lactis subsp. cremoris NBRC100676, Lactococcus lactis subsp. hordniae JCM1180, Lactococcus lactis subsp. hordniae JCM11040, and Lactococcus plantarum JCM11056.

The Leuconostoc bacteria mentioned above may be Leuconostoc carnosum, Leuconostoc lactis, or the like, for example. Specific examples of Leuconostoc bacteria include Leuconostoc carnosum JCM9695 and Leuconostoc lactis NBRC12455.

The Pediococcus bacteria mentioned above may be Pediococcus acidilactici, Pediococcus pentosaceus, Pediococcus cellicola, Pediococcus claussenii, Pediococcus damnosus, Pediococcus ethanolidurans, Pediococcus inopinatus, Pediococcus parvulus, Pediococcus stilesii, or the like, for example. Specific examples of Pediococcus bacteria include Pediococcus acidilactici JCM8797, Pediococcus acidilactici K15, and Pediococcus damnosus JCM5886.

The Streptococcus bacteria mentioned above may be Streptococcus thermophilus or the like, for example. Specific examples of Streptococcus bacteria include Streptococcus thermophilus SBC8781.

The Enterococcus bacteria mentioned above may be Enterococcus alcedinis or the like, for example.

The Lactobacillus bacteria mentioned above may be Lactobacillus paracasei, Lactobacillus delbrueckii, Lactobacillus acidophilus, Lactobacillus casei, Lactobacillus fructivorans, Lactobacillus hilgardii, Lactobacillus rhamnosus, Lactobacillus gasseri, Lactobacillus acidophilus, Lactobacillus bulgaricus, Lactobacillus parakefiri, Lactobacillus plantarum, or Lactobacillus pentosus, for example.

Specific examples of Lactobacillus bacteria include Lactobacillus paracasei KW3110, Lactobacillus paracasei MCC1849, Lactobacillus paracasei K71, Lactobacillus rhamnosus GG, Lactobacillus rhamnosus CRL1505, Lactobacillus gasseri SBT2055, Lactobacillus acidophilus L-92, Lactobacillus bulgaricus OLL1073R-1, Lactobacillus parakefiri (Lentilactobacillus parakefiri in new classification) JCM8573, Lactobacillus plantarum (Lactiplantibacillus plantarum in new classification) L-137, and Lactobacillus pentosus (Lactiplantibacillus pentosus in new classification) ONRICb0240.

The acetic acid bacteria mentioned above may be Gluconacetobacter bacteria, Acetobacter bacteria, Gluconobacter bacteria, or the like, for example, without any specific limitations, are preferably Gluconacetobacter bacteria, are more preferably Gluconacetobacter hansenii, and are even more preferably Gluconacetobacter hansenii GK-1.

The Bacillus bacteria mentioned above may be Bacillus coagulans or the like, for example, without any specific limitations. Specific examples of Bacillus bacteria include Bacillus coagulans SANK70258 strain.

Of the examples given above, the inclusion of one type or two or more types selected from the group consisting of Lactobacillus rhamnosus CRL1505, Lactococcus lactis subsp. lactis JCM5805, and Lactobacillus paracasei KW3110 as the beneficial bacteria is preferable from a viewpoint of further enhancing aromatic richness of the beverage.

In the present disclosure, the dead bacteria of the beneficial bacteria may be a dry material or may be a non-dry material without any specific limitations, though a dry material is preferable from a viewpoint of storage stability of the dead beneficial bacteria. In particular, a dry powder of dead beneficial bacteria is preferable as the dead bacteria of the beneficial bacteria.

No specific limitations are placed on the method by which the dead bacteria of the beneficial bacteria are prepared. For example, a method in which a culture medium where beneficial bacteria have been cultured is sterilized and then filtration and centrifugal separation, or the like, are performed to collect bacterial cells or a method in which bacterial cells are collected by filtration and centrifugal separation, or the like, from a culture medium where beneficial bacteria have been cultured and are then sterilized can be adopted. Note that among beneficial bacteria, particularly lactic acid bacteria, for example, can be cultured using a lactic acid bacteria culture medium that is commonly known to those skilled in the art such as MRS (de Man-Rogosa-Sharpe) culture medium, which contains glucose, hydrolyzed protein, and yeast extract. In general, culturing can be performed under anaerobic conditions with a culture temperature of 30°C to 37°C and a culture period of 2 days to 3 days.

In addition, the bacterial cells that have been collected after culturing can be further subjected to drying and pulverization as necessary. Note that no specific limitations are placed on the means of sterilization, and common means of killing bacteria such as not only heating, but also UV irradiation, γ-ray irradiation, and so forth can be adopted.

The concentration of the dead beneficial bacteria contained in the presently disclosed beverage is required to be 5 × 10⁸/L or more, is preferably 10 × 10⁸/L or more, and more preferably 20 × 10⁸/L or more, and is preferably 4,000 × 10⁸/L or less, more preferably 2,000 × 10⁸/L or less, even more preferably 1,300 × 10⁸/L or less, even more preferably 1,000 × 10⁸/L or less, even more preferably 500 × 10⁸/L or less, and even more preferably 200 × 10⁸/L or less. When the concentration of the dead beneficial bacteria is not less than any of the lower limits set forth above, the aromatic richness of the beverage can be improved. Moreover, when the concentration of the dead beneficial bacteria is not more than any of the upper limits set forth above, odor originating from the beneficial bacteria can be suppressed. The concentration of the dead beneficial bacteria contained in the beverage can be controlled through adjustment of the additive amount of the dead beneficial bacteria that is blended in the beverage. Furthermore, the concentration of the dead beneficial bacteria contained in the beverage can be measured by a commonly known bacterial count measurement method without any specific limitations, and examples thereof include direct microscopy, the electric sensing zone method, the PCR method, and flow cytometry, with flow cytometry being preferable.

In a case in which the beneficial bacteria contained in the presently disclosed beverage are Lactobacillus rhamnosus, an essential range and preferred ranges for the concentration of the dead beneficial bacteria in the presently disclosed beverage are as described above.

Moreover, in a case in which the beneficial bacteria contained in the presently disclosed beverage are Lactococcus lactis subsp. lactis, the concentration of the dead beneficial bacteria in the presently disclosed beverage is required to be 5 × 10⁸/L or more, is preferably 10 × 10⁸/L or more, and more preferably 20 × 10⁸/L or more, and is preferably 4,000 × 10⁸/L or less, more preferably 3,500 × 10⁸/L or less, and more preferably 2,000 × 10⁸/L or less.

### <Fruit juice and vegetable juice>

The fruit juice contained in the presently disclosed beverage may be apple juice, citrus juice (for example, orange juice, mandarin orange juice, grapefruit juice, or lemon juice), grape juice, muscat juice, pineapple juice, peach juice, strawberry juice, or the like, for example, without any specific limitations. Moreover, the vegetable juice may be tomato juice, carrot juice, pumpkin juice, or the like, for example, without any specific limitations. The fruit juice and the vegetable juice may each be one type of juice or a mixture of a plurality of types of juice.

The fruit juice and/or vegetable juice contained in the presently disclosed beverage may be fruit juice that is squeezed juice of a fruit (straight fruit juice), vegetable juice that is squeezed juice of a vegetable (straight vegetable juice), fruit juice that has been concentrated, concentrated and then restored, or diluted with water, or vegetable juice that has been concentrated, concentrated and then restored, or diluted with water.

The pH of the presently disclosed beverage is not specifically limited but has a lower limit of 3.0 or higher, preferably 3.2 or higher, and more preferably 3.5 or higher, and has an upper limit of lower than 7.0, preferably lower than 4.6, and more preferably lower than 4.2.

### [Brix sugar content]

The fruit juice and the vegetable juice in the beverage each have a sugar content of preferably 0.5°Brix or more, more preferably 1.0°Brix or more, and more preferably 2.0°Brix or more. In a case in which the beverage contains both fruit juice and vegetable juice, the sugar content of a mixture of the fruit juice and the vegetable juice is preferably not less than any of the lower threshold values set forth above. Note that the Brix value described above is not the value of an undiluted liquid of the fruit juice or vegetable juice (straight juice) that is blended in the beverage, but rather is the value of a diluted liquid that is obtained through dilution of the fruit juice, etc. with water or the like and that is used at the time of blending in the beverage. No specific limitations are placed on the upper limit for the sugar content of the fruit juice and the vegetable juice, and the sugar content can generally be 20°Brix or less. When the sugar content of the fruit juice and the vegetable juice is not less than any of the lower limits set forth above, aromatic richness of the beverage can be even further improved.

The sugar content of fruit juice and vegetable juice can be measured by a method described in the EXAMPLES section.

### <Other ingredients>

The presently disclosed beverage may contain one type or two or more types of additives selected from the group consisting of acidulants, fragrances and flavorings, colorings, sweeteners, preservatives, thickeners, stabilizers, emulsifiers, dietary fiber, bittering agents, antioxidants, pH modifiers, vitamins, nutritional fortifiers, umami ingredients, dietary fiber, extracts, solvents, minerals, water-soluble functional ingredients, and lipid-soluble functional ingredients within a range not interfering with the effects according to the present disclosure.

### [Non-aqueous solvent]

It is preferable that the presently disclosed beverage contains a non-aqueous solvent and that the concentration of the non-aqueous solvent is 1 ppm or more, with a concentration of 10 ppm or more being preferable, a concentration of 50 ppm or more being even more preferable, and a concentration of 80 ppm or more being particularly preferable. Although no specific limitations are placed on the upper limit for the concentration of the non-aqueous solvent, the concentration is normally less than 10,000 ppm, preferably 9,000 ppm or less, and more preferably 5,000 ppm or less. When the concentration of the non-aqueous solvent in the beverage is not less than any of the lower limits set forth above, aromatic richness of the beverage can be further improved.

A value of X/Y, given that the concentration of the non-aqueous solvent is taken to be X ppm and the concentration of the dead beneficial bacteria is taken to be Y × 10⁸/L, is preferably 0.10 or more, more preferably 0.20 or more, more preferably 0.70 or more, and even more preferably 1.0 or more, and is preferably 500 or less, and more preferably 450 or less. When the value of X/Y is within any of the ranges set forth above, aromatic richness of the beverage can be even further improved.

The non-aqueous solvent preferably includes at least one of nitrous oxide, acetone, ethanol, glycerin, ethyl acetate, methyl acetate, diethyl ether, cyclohexane, dichloromethane, 1,1,2-trichloroethene, edible oil or fat, 1,1,1,2-tetrafluoroethane, 1-butanol, 2-butanol, 2-butanone, butane, 1-propanol, 2-propanol, propane, propylene glycol, hexane, and methanol, and more preferably includes at least one of ethanol and propylene glycol. The concentrations of ethanol and propylene glycol in a beverage can be measured by a method described in the EXAMPLES section. Moreover, the concentrations of other non-aqueous solvents can be measured by gas chromatography according to a standard method.

The presently disclosed beverage may be a beverage that contains the non-aqueous solvent together with a solute such as a fragrance or flavoring, or may be a beverage that contains the non-aqueous solvent without containing a solute such as a fragrance or flavoring.

The presently disclosed beverage may be an immunostimulating composition. An immunostimulating composition is a composition that has immunostimulating ability (immunity activating ability). Immunostimulating ability (immunity activating ability) refers to a natural immune system stimulating effect (activating effect) on cells or living organisms. An immunostimulating composition according to one embodiment may be a dendritic cell activating composition or may be a plasmacytoid dendritic cell activating (pDC activating) composition.

As an immunostimulating composition, the presently disclosed beverage may be a pharmaceutical composition or may be a quasi-pharmaceutical product. The presently disclosed beverage serving as an immunostimulating composition contains the dead beneficial bacteria described above in an effective amount. The term "effective amount" as used here means a content such that with the presently disclosed beverage, dead beneficial bacteria are consumed to a degree that effects such as immunostimulation are displayed upon consumption of the beverage in an amount that is typically drunk. In a case in which the presently disclosed beverage is an immunostimulating composition, the presently disclosed beverage can be a health food, a functional food, a nutrition supplementing food, a food with health claims (for example, a food for specified health use, a food with nutrient function claims, or a food with function claims), a food for special dietary use (for example, an infant food, a food for pregnant or lactating women, or a food for medical use), or a supplement.

In a case in which the presently disclosed beverage is provided as an immunostimulating composition, the presently disclosed beverage can, in particular, be a health food, a functional food, a nutritional composition, a nutrition supplementing food, a food for health use, a food for specified health use, a food with nutrient function claims, a food with function claims, or the like that has immunostimulating ability.

In a case in which the presently disclosed beverage is an immunostimulating composition, the presently disclosed beverage can be labeled for people who are concerned about reduction of immune function or supporting the maintenance of immune function of a healthy person (immune care), for people who are concerned about sun burn and want to suppress reduction of immune function, for people who are concerned about skin damage in daily life, for people who are concerned about skin dryness, for people who are concerned about skin flushing, for people who are concerned about skin erythema, for people who are concerned about skin redness, for people who are concerned about facial redness, for people who are concerned about chapped hands, etc.

Moreover, in a case in which the presently disclosed beverage is an immunostimulating composition, the presently disclosed beverage can be consumed by a subject requiring immunostimulation. The subject requiring immunostimulation may be a subject who is infected with a virus, a subject who has caught a cold, or a subject who is 65 or older, for example, without any specific limitations.

### (Method of producing beverage)

The presently disclosed method of producing a beverage is a method of producing a beverage that contains dead bacteria of beneficial bacteria and at least one of fruit juice and vegetable juice. No specific limitations are placed on the presently disclosed production method so long as it includes a step of adjusting a dead bacteria concentration of beneficial bacteria in the beverage to 5 × 10⁸/L or more in blending of at least one of fruit juice and vegetable juice and dead bacteria of beneficial bacteria. In other words, production can be performed according to a conventional method of producing a beverage that is commonly known so long as the step described above is included.

The step of adjusting a dead bacteria concentration of beneficial bacteria in the beverage to 5 × 10⁸/L or more in blending of at least one of fruit juice and vegetable juice and dead bacteria of beneficial bacteria may, for example, be a step of adding at least one of fruit juice and vegetable juice, optional water, and other optional ingredients into a mixing tank and adding dead bacteria of beneficial bacteria thereto in a proportion of 5 × 10⁸/L or more. Alternatively, the aforementioned step may be a step of simultaneously adding dead bacteria of beneficial bacteria, at least one of fruit juice and vegetable juice, water, and optional ingredients into a mixing tank. The format of addition, order of blending, and so forth are of course not limited to configurations described above.

In the above-described step, the sugar content of the at least one of fruit juice and vegetable juice that is blended is preferably 0.5°Brix or more, more preferably 1.0°Brix or more, and more preferably 2.0°Brix or more. This is because by blending fruit juice, vegetable juice, or a mixture thereof having the sugar content set forth above, it is possible to provide a beverage having even better aromatic richness.

Although it may be the case that the presently disclosed beverage is not a packaged beverage, the presently disclosed beverage is preferably a packaged beverage. A container of the packaged beverage may be a container formed of a plastic material (resin bottle) such as a PET bottle, a polypropylene bottle, or a polyvinyl chloride bottle, a glass bottle container, a paper carton container, a can container, or the like. The volume of the container is not specifically limited but may be 100 mL or more, and preferably 200 mL or more, for example, and may be 1,000 mL or less, and preferably 500 mL or less, for example.

The packaged beverage can be produced by loading a beverage that has been obtained according to the presently disclosed production method set forth above into a container such as any of those listed above and then sealing the container according to a known method.

Although the presently disclosed beverage may be a beverage that has not been subjected to heat sterilization, the presently disclosed beverage is particularly useful as a beverage that has been subjected to heat sterilization. The method and conditions of the heat sterilization can be a method and conditions that are typically used for a beverage such as a packaged beverage, but retort sterilization, UHT (Ultra High Temperature) sterilization, HTST (High Temperature Short Time) sterilization, or pasteurizer sterilization is preferable.

### <Mode of distribution of beverage>

Although the mode of distribution of the presently disclosed beverage may be normal temperature distribution or chilled distribution, the presently disclosed beverage is particularly useful as a product for normal temperature distribution (hereinafter, also referred to as a product for dry distribution). This is because with a product for normal temperature distribution, it is necessary to ensure commercial sterility, which means that heat sterilization conditions are usually harsher than with a product for chilled distribution and that reduction of flavor is more likely to arise. Moreover, although the development of deteriorated off-aroma during storage over a long period is an issue in the case of a product for normal temperature distribution, the development of deteriorated off-aroma can be reduced in the presently disclosed beverage, depending on the conditions. The reason for this is not clear, but it is presumed that as a result of the presently disclosed beverage containing dead beneficial bacteria in not less than a specific concentration, these dead beneficial bacteria may act to suppress the development of deteriorated off-aroma due to vegetable juice or fruit juice than can arise in the beverage upon storage under dry distribution storage conditions or may act to mask deteriorated off-aroma that has developed.

Note that "deteriorated off-aroma" of a beverage referred to in the present specification indicates an unpleasant aroma such as an odor that can develop through deterioration of fruit juice or vegetable juice contained in the beverage during storage of the beverage under dry distribution conditions.

### (Method of enhancing aromatic richness of beverage)

The method according to the present disclosure for enhancing aromatic richness of a beverage that contains dead bacteria of beneficial bacteria and at least one of fruit juice and vegetable juice is not specifically limited so long as it includes adjusting a dead bacteria concentration of beneficial bacteria in the beverage to 5 × 10⁸/L or more in blending of at least one of fruit juice and vegetable juice and dead bacteria of beneficial bacteria.

The method by which the concentration of dead beneficial bacteria in the beverage is adjusted to 5 × 10⁸/L or more in blending of at least one of fruit juice and vegetable juice and dead beneficial bacteria can be any of the same methods as for the step described in relation to the presently disclosed method of producing a beverage.

### EXAMPLES

The following provides a more specific description of the present disclosure based on examples. However, the present disclosure is not limited to these examples.

In each of the test groups described below, various measurements and evaluations were performed by the following methods.

### <Physical property measurement>

### <<Brix sugar content of fruit juice and vegetable juice>>

The sugar content of fruit juice and vegetable juice was measured as the refractive index of the fruit juice and vegetable juice at 20°C using a refractometer (digital refractometer Rx-5000α produced by Atago Co., Ltd.).

### <<Non-aqueous solvent concentration>>

### [Ethanol concentration]

The concentration of ethanol in each test group was quantified by gas chromatography with a flame ionization detector (GC-FID) using a standard addition method. The analysis by GC-FID was more specifically performed as follows. Each beverage sample was added into a headspace vial with internal standard tert-butanol and ethanol and was diluted and sealed in the vial to prepare an analysis sample. Note that the internal standard in the analysis sample was a fixed concentration, and the ethanol was adjusted such as to give each calibration point concentration. The analysis sample was measured, and the ethanol concentration in each beverage sample was determined.

### [Propylene glycol concentration]

The concentration of propylene glycol in each test group was measured by gas chromatography with a flame ionization detector (GC-FID). The analysis by GC-FID was more specifically performed as follows. First, calibration curve standard solutions were prepared by adding methanol to propylene glycol so as to dilute the propylene glycol and give each calibration point concentration. Next, each calibration curve standard solution was injected into a gas chromatograph, and a calibration curve was prepared from the peak area. Thereafter, each beverage sample that had been extracted into methanol was injected into the gas chromatograph, and the concentration of propylene glycol in each beverage sample was determined based on the obtained peak area and the calibration curve.

### (Test 1) Change of aromatic richness and odor originating from beneficial bacteria due to addition of dead bacteria of beneficial bacteria

The following test was conducted in order to investigate the change of aromatic richness and odor originating from beneficial bacteria due to addition of dead beneficial bacteria to fruit juice and vegetable juice compared to a case in which dead beneficial bacteria are not added.

### <Sample preparation>

Rhamnosus live bacteria powder (including one type or a plurality of types of Lactobacillus rhamnosus) of 3,500 × 10⁸/g in concentration was diluted by a factor of 35 using water and was subjected to 60 minutes of sterilization at 80°C to prepare a rhamnosus dead bacteria aqueous solution of 100 × 10⁸/g in concentration. A Lactococcus lactis subsp. lactis JCM5805 dead bacteria aqueous solution of 100 × 10⁸/g in concentration was also prepared by adding water to JCM5805 dead bacteria powder. When referring to "the dead beneficial bacteria aqueous solution" in the following description, this means the rhamnosus dead bacteria aqueous solution or the JCM5805 dead bacteria aqueous solution that was prepared as described above.

An aqueous solution was prepared such as to contain clear apple juice with a final concentration of 2°Brix. This aqueous solution was taken to be test group 1 (control). In addition, an aqueous solution was prepared such as to contain clear apple juice with a final concentration of 2°Brix, and the dead beneficial bacteria aqueous solution was added thereto such as to give the dead beneficial bacteria final concentrations indicated in Table 1-1 and Table 1-5 and thereby prepare test groups 2 to 10 and test groups 55 to 58.

Aqueous solutions were also prepared in the same manner as described above for orange juice, grape juice, tomato juice, and carrot juice such as to have the fruit juice or vegetable juice sugar contents and the dead beneficial bacteria final concentrations indicated in Tables 1-1 to 1-3 and Tables 1-5 to 1-7 and thereby prepare test groups 11 to 50 and test groups 59 to 74. Note that test groups 11, 21, 31, and 41 are controls.

Moreover, an aqueous solution (mixed juice) having a final concentration of 5°Brix was prepared by mixing tomato juice such as to have a final concentration of 1°Brix, carrot juice such as to have a final concentration of 1°Brix, apple juice such as to have a final concentration of 1°Brix, orange juice such as to have a final concentration of 1°Brix, and grape juice such as to have a final concentration of 1°Brix, and this aqueous solution was taken to be test group 51 (control).

Furthermore, test groups 52 to 54 and test groups 75 to 77 were prepared by preparing an aqueous solution such as to contain the mixed juice in a final concentration of 5°Brix and adding the dead beneficial bacteria aqueous solution such as to give the dead beneficial bacteria final concentrations indicated in Table 1-4 and Table 1-8.

### <Sensory evaluation>

For beverages obtained in the test groups that had been prepared at approximately 20°C, five trained panelists having sensory discrimination ability evaluated each of aromatic richness and lack of odor originating from beneficial bacteria in the beverage obtained in each test group based on an evaluation standard described below. An average value of the evaluation scores of the five panelists was calculated. Note that the standard error of the average value for all panelists was 0.2 or less. The results are shown in Tables 1-1 to 1-8.

Note that in the evaluation, the evaluation standard was set as follows for each type of beneficial bacteria.

With regard to aromatic richness, for each fruit juice, vegetable juice, and mixed juice, a sample without addition of dead beneficial bacteria and a sample where 1,000 × 10⁸/L of dead beneficial bacteria were added were respectively fixed as 1 point and 4 points, the interval from 1 point to 4 points was equally divided to set a standard per "1 point" of evaluation score, and an evaluation of 1 point to 5 points (a larger score is preferable) was made based on this standard. In other words, samples where rhamnosus dead bacteria were added were evaluated with a sample where rhamnosus dead bacteria were not added and a sample where 1,000 × 10⁸/L of rhamnosus dead bacteria were added as standards, and samples where JCM5805 dead bacteria were added were evaluated with a sample where JCM5805 dead bacteria were not added and a sample where 1,000 × 10⁸/L of JCM5805 dead bacteria were added as standards.

With regard to lack of odor originating from beneficial bacteria, for each fruit juice, vegetable juice, and mixed juice, a sample without addition of dead beneficial bacteria and a sample where 2,000 × 10⁸/L of dead beneficial bacteria were added were respectively fixed as 5 points and 2 points, the interval from 2 points to 5 points was equally divided to set a standard per "1 point" of evaluation score, and an evaluation of 1 point to 5 points (a larger score is preferable) was made based on this standard. In other words, samples where rhamnosus dead bacteria were added were evaluated with a sample where rhamnosus dead bacteria were not added and a sample where 2,000 × 10⁸/L of rhamnosus dead bacteria were added as standards, and samples where JCM5805 dead bacteria were added were evaluated with a sample where JCM5805 dead bacteria were not added and a sample where 2,000 × 10⁸/L of JCM5805 dead bacteria were added as standards.

### (Test 2) Influence of sugar content of fruit juice and vegetable juice on aromatic richness and odor originating from beneficial bacteria of beverage

The following test was conducted in order to investigate the influence of the sugar content of fruit juice and vegetable juice on aromatic richness and odor originating from beneficial bacteria of a beverage.

### <Sample preparation>

Rhamnosus live bacteria powder (including one type or a plurality of types of Lactobacillus rhamnosus) of 3,500 × 10⁸/g in concentration was diluted by a factor of 35 using water and was subjected to 60 minutes of sterilization at 80°C to prepare a rhamnosus dead bacteria aqueous solution of 100 × 10⁸/g in concentration. A Lactococcus lactis subsp. lactis JCM5805 dead bacteria aqueous solution of 100 × 10⁸/g in concentration was also prepared by adding water to JCM5805 dead bacteria powder.

Aqueous solutions were prepared such as to contain clear apple juice or tomato juice with a final concentration of 0.5°Brix, and these aqueous solutions were taken to be test groups 78 and 82 (controls). Test groups 79, 83, 86, and 88 were prepared by preparing aqueous solutions such as to contain clear apple juice or tomato juice with a final concentration of 0.5°Brix and adding the dead beneficial bacteria aqueous solution such that the final concentration of rhamnosus dead bacteria was 20 × 10⁸/L or the final concentration of JCM5805 dead bacteria was 2,000 × 10⁸/L.

Test groups 80 and 84 (controls) and test groups 81, 85, 87, and 89 were prepared in the same manner as described above by preparing aqueous solutions such as to contain clear apple juice with a final concentration of 10°Brix or tomato juice with a final concentration of 4.5°Brix and adding the dead beneficial bacteria aqueous solution such as to give the dead beneficial bacteria final concentrations indicated in Table 2-1 and Table 2-2.

### <Sensory evaluation>

For beverages obtained in the test groups that had been prepared at approximately 20°C, five trained panelists having sensory discrimination ability evaluated each of aromatic richness and lack of odor originating from beneficial bacteria of the beverage obtained in each test group based on an evaluation standard described below. An average value of the evaluation scores of the five panelists was calculated.

Note that the standard error of the average value for all panelists in this evaluation was 0.2 or less. The results are shown in Table 2-1 and Table 2-2.

Note that in the evaluation, the evaluation standard was set as follows for each type of beneficial bacteria.

With regard to aromatic richness, for each sugar content of each fruit juice and vegetable juice (i.e., for each of 0.5°Brix apple juice, 10°Brix apple juice, 0.5°Brix tomato juice, and 4.5°Brix tomato juice), a sample without addition of dead beneficial bacteria and a sample where 1,000 × 10⁸/L of dead beneficial bacteria were added were respectively fixed as 1 point and 4 points (data not indicated), the interval from 1 point to 4 points was equally divided to set a standard per "1 point" of evaluation score, and an evaluation of 1 point to 5 points (a larger score is preferable) was made based on this standard. In other words, samples where rhamnosus dead bacteria were added were evaluated with a sample where rhamnosus dead bacteria were not added and a sample where 1,000 × 10⁸/L of rhamnosus dead bacteria were added as standards, and samples where JCM5805 dead bacteria were added were evaluated with a sample where JCM5805 dead bacteria were not added and a sample where 1,000 × 10⁸/L of JCM5805 dead bacteria were added as standards.

With regard to lack of odor originating from beneficial bacteria, an evaluation was made as follows for each sugar content of each fruit juice and vegetable juice.

For rhamnosus, a sample without addition of rhamnosus dead bacteria and a sample where 2,000 × 10⁸/L of rhamnosus dead bacteria were added were respectively fixed as 5 points and 2 points (data not indicated), the interval from 2 points to 5 points was equally divided to set a standard per "1 point" of evaluation score, and an evaluation of 1 point to 5 points (a larger score is preferable) was made based on this standard.

For JCM5805, a sample without addition of JCM5805 dead bacteria and a sample where 4,000 × 10⁸/L of JCM5805 dead bacteria were added were respectively fixed as 5 points and 1 point (data not indicated), the interval from 1 point to 5 points was equally divided to set a standard per "1 point" of evaluation score, and an evaluation of 1 point to 5 points (a larger score is preferable) was made based on this standard.

### (Test 3) Influence of inclusion of non-aqueous solvent on aromatic richness and odor originating from beneficial bacteria of beverage

The following test was conducted in order to investigate the influence of a non-aqueous solvent on aromatic richness and odor originating from beneficial bacteria of a beverage.

### <Sample preparation>

Rhamnosus live bacteria powder (including one type or a plurality of types of Lactobacillus rhamnosus) of 3,500 × 10⁸/g in concentration was diluted by a factor of 35 using water and was subjected to 60 minutes of sterilization at 80°C to prepare a rhamnosus dead bacteria aqueous solution of 100 × 10⁸/g in concentration. A Lactococcus lactis subsp. lactis JCM5805 dead bacteria aqueous solution of 100 × 10⁸/g in concentration was also prepared by adding water to JCM5805 dead bacteria powder.

Mixtures were prepared by preparing aqueous solutions such as to contain clear apple juice with a final concentration of 2°Brix, adding the dead beneficial bacteria aqueous solution and ethanol and/or propylene glycol such as to give dead beneficial bacteria final concentrations and ethanol and/or propylene glycol final concentrations indicated in Table 3-1 and Table 3-3, and adding anhydrous citric acid such that the final pH was approximately 4.0. Each of the mixtures was loaded into a can and was sterilized at 80°C for 10 minutes by a pasteurizer to thereby prepare test groups 90 to 101 and test groups 122 to 129.

Mixtures were also prepared in the same manner as described above by preparing aqueous solutions such as to contain orange juice or grape juice with a final concentration of 2°Brix, tomato juice with a final concentration of 7°Brix, or carrot juice with a final concentration of 4°Brix, adding the dead beneficial bacteria aqueous solution and ethanol and/or propylene glycol such as to give dead beneficial bacteria final concentrations and ethanol and/or propylene glycol final concentrations indicated in Tables 3-1 to 3-4, and adding anhydrous citric acid such that the final pH was approximately 4.0. Each of the mixtures was loaded into a can and was sterilized at 80°C for 10 minutes by a pasteurizer to thereby prepare test groups 102 to 119 and test groups 130 to 140.

In addition, mixtures were prepared by preparing aqueous solutions (mixed juice) having a final concentration of 5°Brix through mixing of tomato juice such as to have a final concentration of 1°Brix, carrot juice such as to have a final concentration of 1°Brix, apple juice such as to have a final concentration of 1°Brix, orange juice such as to have a final concentration of 1°Brix, and grape juice such as to have a final concentration of 1°Brix, adding the dead beneficial bacteria aqueous solution and ethanol such as to give dead beneficial bacteria final concentrations and ethanol final concentrations indicated in Table 3-2 and Table 3-4, and adding anhydrous citric acid such that the final pH was approximately 4.0. Each of the mixtures was loaded into a can and was sterilized at 80°C for 10 minutes by a pasteurizer to thereby prepare test groups 120, 121, and 141.

### <Sensory evaluation>

For beverages obtained in the test groups that had been prepared at approximately 20°C, five trained panelists having sensory discrimination ability evaluated each of aromatic richness and lack of odor originating from beneficial bacteria of the beverage obtained in each test group based on an evaluation standard described below. An average value of the evaluation scores of the five panelists was calculated. Note that the standard error of the average value for all panelists was 0.2 or less. The results are shown in Tables 3-1 to 3-4.

Note that in the evaluation, the evaluation standard was set as follows for each type of beneficial bacteria.

With regard to aromatic richness, for each fruit juice, vegetable juice, and mixed juice, a sample without addition of dead beneficial bacteria that did not contain a non-aqueous solvent and a sample where 1,000 × 10⁸/L of dead beneficial bacteria were added that did not contain a non-aqueous solvent were respectively fixed as 1 point and 4 points (data not indicated), the interval from 1 point to 4 points was equally divided to set a standard per "1 point" of evaluation score, and an evaluation of 1 point to 5 points (a larger score is preferable) was made based on this standard. In other words, samples where rhamnosus dead bacteria were added were evaluated with a sample where rhamnosus dead bacteria were not added and a sample where 1,000 × 10⁸/L of rhamnosus dead bacteria were added as standards, and samples where JCM5805 dead bacteria were added were evaluated with a sample where JCM5805 dead bacteria were not added and a sample where 1,000 × 10⁸/L of JCM5805 dead bacteria were added as standards.

With regard to lack of odor originating from beneficial bacteria, an evaluation was made as follows for each fruit juice, vegetable juice, and mixed juice.

For rhamnosus, a sample without addition of rhamnosus dead bacteria that did not contain a non-aqueous solvent and a sample where 2,000 × 10⁸/L of rhamnosus dead bacteria were added that did not contain a non-aqueous solvent were respectively fixed as 5 points and 2 points (data not indicated), the interval from 2 points to 5 points was equally divided to set a standard per "1 point" of evaluation score, and an evaluation of 1 point to 5 points (a larger score is preferable) was made based on this standard.

For JCM5805, a sample without addition of JCM5805 dead bacteria that did not contain a non-aqueous solvent and a sample where 4,000 × 10⁸/L of JCM5805 dead bacteria were added that did not contain a non-aqueous solvent were respectively fixed as 5 points and 1 point (data not indicated), the interval from 1 point to 5 points was equally divided to set a standard per "1 point" of evaluation score, and an evaluation of 1 point to 5 points (a larger score is preferable) was made based on this standard.

### (Test 4) Influence of beverage distribution conditions on aromatic richness of beverage

The following test was conducted in order to investigate the influence of storage conditions during beverage distribution on aromatic richness of a beverage.

### <Sample preparation>

Rhamnosus live bacteria powder (including one type or a plurality of types of Lactobacillus rhamnosus) of 3,500 × 10⁸/g in concentration was diluted by a factor of 35 using water and was subjected to 60 minutes of sterilization at 80°C to prepare a rhamnosus dead bacteria aqueous solution of 100 × 10⁸/g in concentration. A Lactococcus lactis subsp. lactis JCM5805 dead bacteria aqueous solution of 100 × 10⁸/g in concentration was also prepared by adding water to JCM5805 dead bacteria powder.

Mixtures were prepared by preparing aqueous solutions such as to contain clear apple juice with a final concentration of 2°Brix or tomato juice with a final concentration of 7°Brix, adding the dead beneficial bacteria aqueous solution such as to give dead beneficial bacteria final concentrations indicated in Table 4-1 and Table 4-2, and adding anhydrous citric acid such that the final pH was approximately 4.0. Each of the mixtures was loaded into a can and was sterilized at 80°C for 10 minutes by a pasteurizer to thereby prepare test groups 142, 144, 148, and 150. For these test groups, samples were also prepared in the same manner but without addition of the dead beneficial bacteria aqueous solution, and these samples were taken to be controls.

In addition, mixtures were prepared by preparing aqueous solutions (mixed juice) having a final concentration of 5°Brix through mixing of tomato juice such as to have a final concentration of 1°Brix, carrot juice such as to have a final concentration of 1°Brix, apple juice such as to have a final concentration of 1°Brix, orange juice such as to have a final concentration of 1°Brix, and grape juice such as to have a final concentration of 1°Brix, adding the dead beneficial bacteria aqueous solution such as to give dead beneficial bacteria final concentrations indicated in Table 4-1 and Table 4-2, and adding anhydrous citric acid such that the final pH was approximately 4.0. Each of the mixtures was loaded into a can and was sterilized at 80°C for 10 minutes by a pasteurizer to thereby prepare test groups 146 and 152. For these test groups, a sample was prepared in the same manner but without addition of the dead beneficial bacteria aqueous solution, and this sample was taken to be a control. Test groups 142, 144, 146, 148, 150, and 152 and controls without dead beneficial bacteria addition corresponding to these test groups were stored at rest in an incubator at 5°C for 2 weeks.

Moreover, a sample that had been prepared in the same way as test group 142 and then stored at rest in an incubator at 50°C for 2 weeks was taken to be test group 143. Likewise, a sample that had been prepared in the same way as test group 144 and then stored at rest in an incubator at 50°C for 2 weeks was taken to be test group 145, and a sample that had been prepared in the same way as test group 146 and then stored at rest in an incubator at 50°C for 2 weeks was taken to be test group 147. In the same manner, samples were prepared in the same way as test groups 148, 150, and 152, and these samples were stored at rest in an incubator at 50°C for 2 weeks to prepare test groups 149, 151, and 153. Controls without dead beneficial bacteria addition corresponding to test groups 143, 145, 147, 149, 151, and 153 were also stored at rest in an incubator at 50°C for 2 weeks.

### <Sensory evaluation>

For beverages obtained in the test groups that had been prepared at approximately 20°C, five trained panelists having sensory discrimination ability evaluated the increase of aromatic richness of a sample for each test group based on the following evaluation standard. An average value of the evaluation scores of the five panelists was calculated. Note that the standard error of the average value for all panelists was 0.3 or less. The results are shown in Table 4-1 and Table 4-2.

Note that in the evaluation, the evaluation standard was set as follows for each type of beneficial bacteria.

The increase of aromatic richness (hereinafter, referred to as "Δaromatic richness") of test groups 142, 144, 146, 148, 150, and 152 where dead beneficial bacteria were added, relative to each control where dead beneficial bacteria were not added with storage conditions of 2 weeks at 5°C, was defined as 3 points, and the increase of aromatic richness of controls where dead beneficial bacteria were not added with the same storage conditions was defined as 1 point. Based thereon, Δaromatic richness of test groups 143, 145, 147, 149, 151, and 153 where the same type of dead beneficial bacteria was added with storage conditions of 2 weeks at 50°C, relative to each control where dead beneficial bacteria were not added with the same storage conditions, was given an evaluation of 1 point to 5 points.

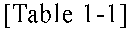

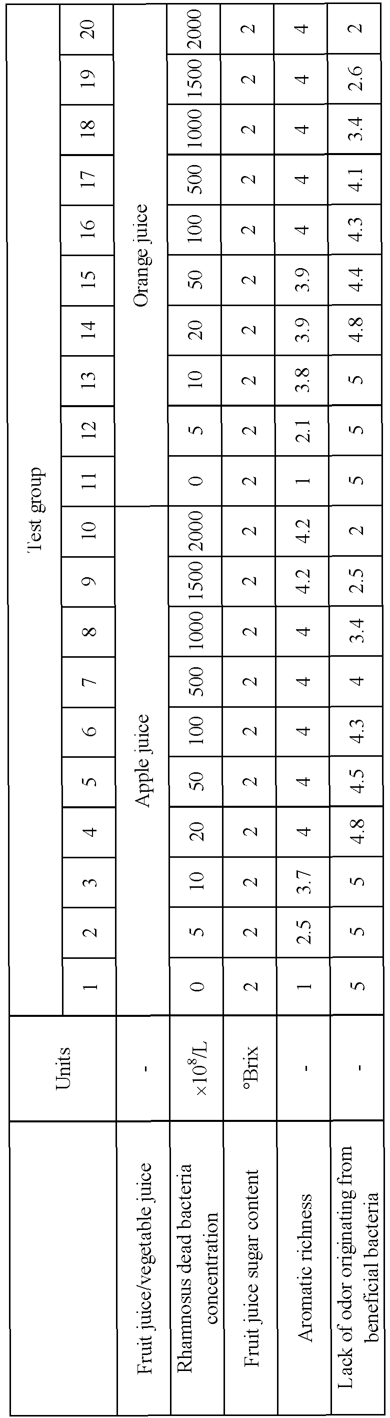

| | Units | Test group | | | | | | | | | |
|---|---|---|---|---|---|---|---|---|---|---|---|
| | | 21 | 22 | 23 | 24 | 25 | 26 | 27 | 28 | 29 | 30 |
| Fruit juice/vegetable juice | - | Grape juice | | | | | | | | | |
| Rhamnosus dead bacteria concentration | ×10⁸/L | 0 | 5 | 10 | 20 | 50 | 100 | 500 | 1000 | 1500 | 2000 |
| Fruit juice sugar content | °Brix | 2 | 2 | 2 | 2 | 2 | 2 | 2 | 2 | 2 | 2 |
| Aromatic richness | - | 1 | 2 | 3.8 | 3.9 | 4 | 4 | 4 | 4 | 4.1 | 4.1 |
| Lack of odor originating from beneficial bacteria | - | 5 | 5 | 5 | 5 | 4.6 | 4.4 | 4.3 | 3.5 | 2.8 | 2 |

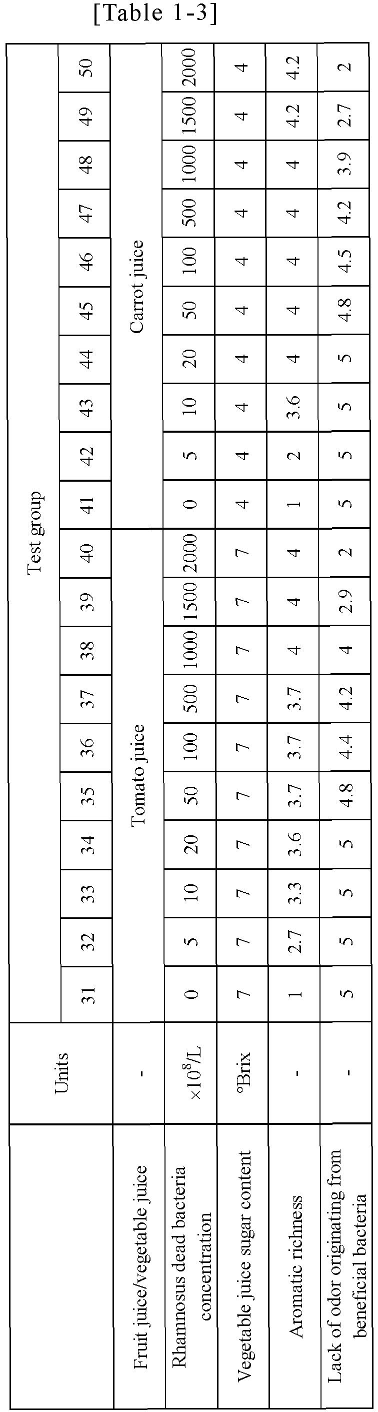

**[Table 1-4]**

| | Units | Test group | | | |
|---|---|---|---|---|---|
| | | 51 | 52 | 53 | 54 |
| Fruit juice/vegetable juice | - | Mixed juice | | | |
| Rhamnosus dead bacteria concentration | ×10⁸/L | 0 | 20 | 1000 | 2000 |
| Fruit juice and/or vegetable juice sugar content | °Brix | 5 | 5 | 5 | 5 |
| Aromatic richness | - | 1 | 4 | 4 | 4.1 |
| Lack of odor originating from beneficial bacteria | - | 5 | 4.9 | 3.3 | 2 |

**[Table 1-5]**

| | Units | Test group | | | | | | | | | |
|---|---|---|---|---|---|---|---|---|---|---|---|
| | | 1 | 55 | 56 | 57 | 58 | 11 | 59 | 60 | 61 | 62 |
| Fruit juice/vegetable juice | - | Apple juice | | | | | Orange juice | | | | |
| JCM5805 dead bacteria concentration | ×10⁸/L | 0 | 5 | 20 | 1000 | 2000 | 0 | 5 | 20 | 1000 | 2000 |
| Fruit juice sugar content | °Brix | 2 | 2 | 2 | 2 | 2 | 2 | 2 | 2 | 2 | 2 |
| Aromatic richness | - | 1 | 2.6 | 3.6 | 4 | 4.3 | 1 | 25 | 3.4 | 4 | 4 |
| Lack of odor originating from beneficial bacteria | - | 5 | 5 | 4.4 | 3.4 | 2 | 5 | 4.7 | 4.2 | 3.3 | 2 |

**[Table 1-6]**

| | Units | Test group | | | | |
|---|---|---|---|---|---|---|
| | | 21 | 63 | 64 | 65 | 66 |
| Fruit juice/vegetable juice | - | Grape juice | | | | |
| JCM5805 dead bacteria concentration | ×10⁸/L | 0 | 5 | 20 | 1000 | 2000 |
| Fruit juice sugar content | °Brix | 2 | 2 | 2 | 2 | 2 |
| Aromatic richness | - | 1 | 2.3 | 3.5 | 4 | 4.3 |
| Lack of odor originating from beneficial bacteria | - | 5 | 4.9 | 4.6 | 3.6 | 2 |

**[Table 1-7]**

| | Units | Test group | | | | | | | | | |
|---|---|---|---|---|---|---|---|---|---|---|---|
| | | 31 | 67 | 68 | 69 | 70 | 41 | 71 | 72 | 73 | 74 |
| Fruit juice/vegetable juice | - | Tomato juice | | | | | Carrot juice | | | | |
| JCM5805 dead bacteria concentration | ×10⁸/L | 0 | 5 | 20 | 1000 | 2000 | 0 | 5 | 20 | 1000 | 2000 |
| Vegetable juice sugar content | °Brix | 7 | 7 | 7 | 7 | 7 | 4 | 4 | 4 | 4 | 4 |
| Aromatic richness | - | 1 | 2.7 | 3.7 | 4 | 4.3 | 1 | 2.5 | 3.7 | 4 | 4.2 |
| Lack of odor originating from beneficial bacteria | - | 5 | 4.9 | 4.8 | 4.2 | 2 | 5 | 4.9 | 4.7 | 4.1 | 2 |

**[Table 1-8]**

| | Units | Test group | | | |
|---|---|---|---|---|---|
| | | 51 | 75 | 76 | 77 |
| Fruit juice/vegetable juice | - | Mixed juice | | | |
| JCM5805 dead bacteria concentration | ×10⁸/L | 0 | 20 | 1000 | 2000 |
| Fruit juice and/or vegetable juice sugar content | °Brix | 5 | 5 | 5 | 5 |
| Aromatic richness | - | 1 | 3.7 | 4 | 4.4 |
| Lack of odor originating from beneficial bacteria | - | 5 | 4.9 | 3.8 | 2 |

| | Units | Test group | | | | | | | |
|---|---|---|---|---|---|---|---|---|---|
| | | 78 | 79 | 80 | 81 | 82 | 83 | 84 | 85 |
| Fruit juice/vegetable juice | - | Apple juice | | | | Tomato juice | | | |
| Rhamnosus dead bacteria concentration | ×10⁸/L | 0 | 20 | 0 | 20 | 0 | 20 | 0 | 20 |
| Fruit juice and/or vegetable juice sugar content | °Brix | 0.5 | 0.5 | 10 | 10 | 0.5 | 0.5 | 4.5 | 4.5 |
| Aromatic richness | - | 1 | 3.7 | 1 | 4 | 1 | 3.4 | 1 | 3.6 |
| Lack of odor originating from beneficial bacteria | - | 5 | 4.7 | 5 | 4.8 | 5 | 4.6 | 5 | 4.9 |

| | Units | Test group | | | | | | | |
|---|---|---|---|---|---|---|---|---|---|
| | | 78 | 86 | 80 | 87 | 82 | 88 | 84 | 89 |
| Fruit juice/vegetable juice | - | Apple juice | | | | Tomato juice | | | |
| JCM5805 dead bacteria concentration | ×10⁸/L | 0 | 2000 | 0 | 2000 | 0 | 2000 | 0 | 2000 |
| Fruit juice and/or vegetable juice sugar content | °Brix | 0.5 | 0.5 | 10 | 10 | 0.5 | 0.5 | 4.5 | 4.5 |
| Aromatic richness | - | 1 | 3.7 | 1 | 4 | 1 | 3.6 | 1 | 3.8 |
| Lack of odor originating from beneficial bacteria | - | 5 | 2.9 | 5 | 3.3 | 5 | 3.2 | 5 | 3.6 |

| | Units | Test group | | | | | | | | | | | | | | | |
|---|---|---|---|---|---|---|---|---|---|---|---|---|---|---|---|---|---|
| | | 90 | 91 | 92 | 93 | 94 | 95 | 96 | 97 | 98 | 99 | 100 | 101 | 102 | 103 | 104 | 105 |
| Fruit juice/vegetable juice | - | Apple juice | | | | | | | | | | | | Orange juice | | Grape juice | |
| Rhamnosus dead bacteria concentration | ×10⁸/L | 20 | 20 | 20 | 20 | 20 | 20 | 20 | 20 | 20 | 20 | 20 | 20 | 20 | 20 | 20 | 20 |
| Fruit juice sugar content | °Brix | 2 | 2 | 2 | 2 | 2 | 2 | 2 | 2 | 2 | 2 | 2 | 2 | 2 | 2 | 2 | 2 |
| Ethanol | ppm | 0 | 5 | 100 | 500 | 2500 | 9000 | 0 | 0 | 0 | 0 | 0 | 250 | 0 | 500 | 0 | 500 |
| Propylene glycol | ppm | 0 | 0 | 0 | 0 | 0 | 0 | 5 | 100 | 500 | 2500 | 9000 | 250 | 0 | 0 | 0 | 0 |
| [Non-aqueous solvent concentration X (ppm)]/ [Dead bacteria concentration Y × 10⁸/L] | - | 0 | 0.25 | 5 | 25 | 125 | 450 | 0.25 | 5 | 25 | 125 | 450 | 25 | 0 | 25 | 0 | 25 |
| Aromatic richness | - | 4 | 4.1 | 4.8 | 4.8 | 4.9 | 4.9 | 4.1 | 4.7 | 4.7 | 4.7 | 4.8 | 4.9 | 3.9 | 4.9 | 3.9 | 4.9 |
| Lack of odor originating from beneficial bacteria | - | 4.8 | 4.8 | 4.8 | 4.9 | 4.8 | 4.8 | 4.8 | 4.8 | 4.9 | 4.8 | 4.8 | 4.8 | 4.8 | 4.8 | 5 | 5 |

| | Units | Test group | | | | | | | | | | | | | | | |
|---|---|---|---|---|---|---|---|---|---|---|---|---|---|---|---|---|---|
| | | 106 | 107 | 108 | 109 | 110 | 111 | 112 | 113 | 114 | 115 | 116 | 117 | 118 | 119 | 120 | 121 |
| Fruit juice/vegetable juice | - | Tomato juice | | | | | | | | | | | | Carrot juice | | Mixed juice | |
| Rhamnosus dead bacteria concentration | ×10⁸/L | 20 | 20 | 20 | 20 | 20 | 20 | 20 | 20 | 20 | 20 | 20 | 20 | 20 | 20 | 20 | 20 |
| Vegetable juice and/or fruit juice sugar content | °Brix | 7 | 7 | 7 | 7 | 7 | 7 | 7 | 7 | 7 | 7 | 7 | 7 | 4 | 4 | 5 | 5 |
| Ethanol concentration | ppm | 0 | 5 | 100 | 500 | 2500 | 9000 | 0 | 0 | 0 | 0 | 0 | 250 | 0 | 500 | 0 | 500 |
| Propylene glycol concentration | ppm | 0 | 0 | 0 | 0 | 0 | 0 | 5 | 100 | 500 | 2500 | 9000 | 250 | 0 | 0 | 0 | 0 |
| [Non-aqueous solvent concentration X (ppm)]/ [Dead bacteria concentration Y × 10⁸/L] | - | 0 | 0.25 | 5 | 25 | 125 | 450 | 0.25 | 5 | 25 | 125 | 450 | 25 | 0 | 25 | 0 | 25 |
| Aromatic richness | - | 3.6 | 3.7 | 4.4 | 4.5 | 4.6 | 4.7 | 3.7 | 4.2 | 4.2 | 4.6 | 4.6 | 4.7 | 4 | 4.6 | 4 | 4.6 |
| Lack of odor originating from beneficial bacteria | - | 5 | 5 | 5 | 5 | 5 | 5 | 5 | 5 | 5 | 5 | 5 | 5 | 5 | 5 | 4.9 | 5 |

| | Units | Test group | | | | | | | | | |
|---|---|---|---|---|---|---|---|---|---|---|---|
| | | 122 | 123 | 124 | 125 | 126 | 127 | 128 | 129 | 130 | 131 |
| Fruit juice/vegetable juice | - | Apple juice | | | | | | | | Orange juice | Grape juice |
| JCM5805 dead bacteria concentration | ×10⁸/L | 2000 | 2000 | 2000 | 2000 | 2000 | 2000 | 2000 | 2000 | 2000 | 2000 |
| Fruit juice sugar content | °Brix | 2 | 2 | 2 | 2 | 2 | 2 | 2 | 2 | 2 | 2 |
| Ethanol | ppm | 5 | 500 | 2500 | 9000 | 0 | 0 | 0 | 250 | 500 | 500 |
| Propylene glycol | ppm | 0 | 0 | 0 | 0 | 5 | 500 | 9000 | 250 | 0 | 0 |
| [Non-aqueous solvent concentration X (ppm)]/ [Dead bacteria concentration Y × 10⁸/L] | - | 0.25 | 25 | 125 | 450 | 0.25 | 25 | 450 | 25 | 25 | 25 |
| Aromatic richness | - | 4.2 | 4.4 | 4.5 | 4.7 | 4.2 | 4.4 | 4.8 | 4.6 | 4.4 | 4.5 |
| Lack of odor originating from beneficial bacteria | - | 2.8 | 2.9 | 2.9 | 2.8 | 2.9 | 2.9 | 2.8 | 2.9 | 2.9 | 2.9 |

| | Units | Test group | | | | | | | | | |
|---|---|---|---|---|---|---|---|---|---|---|---|
| | | 132 | 133 | 134 | 135 | 136 | 137 | 138 | 139 | 140 | 141 |
| Fruit juice/vegetable juice | - | Tomato juice | | | | | | | | Carrot juice | Mixed juice |
| JCM5805 dead bacteria concentration | ×10⁸/L | 2000 | 2000 | 2000 | 2000 | 2000 | 2000 | 2000 | 2000 | 2000 | 2000 |
| Vegetable juice and/or fruit juice sugar content | °Brix | 7 | 7 | 7 | 7 | 7 | 7 | 7 | 7 | 4 | 5 |
| Ethanol concentration | ppm | 5 | 500 | 2500 | 9000 | 0 | 0 | 0 | 250 | 500 | 500 |
| Propylene glycol concentration | ppm | 0 | 0 | 0 | 0 | 5 | 500 | 9000 | 250 | 0 | 0 |
| [Non-aqueous solvent concentration X (ppm)]/ [Dead bacteria concentration Y × 10⁸/L] | - | 0.25 | 25 | 125 | 450 | 0.25 | 25 | 450 | 25 | 25 | 25 |
| Aromatic richness | - | 4.2 | 4.4 | 4.6 | 4.7 | 4 | 4.4 | 4.8 | 4.5 | 4.5 | 4.4 |
| Lack of odor originating from beneficial bacteria | - | 3.6 | 3.6 | 3.6 | 3.6 | 3.6 | 3.6 | 3.6 | 3.6 | 3.5 | 3.5 |

**[Table 4-1]**

| | Units | Test group | | | | | |
|---|---|---|---|---|---|---|---|
| | | 142 | 143 | 144 | 145 | 146 | 147 |
| Fruit juice/vegetable juice | - | Apple juice | | Tomato juice | | Mixed juice | |
| Rhamnosus dead bacteria concentration | ×10⁸/L | 20 | 20 | 20 | 20 | 20 | 20 |
| Vegetable juice and/or fruit juice sugar content | °Brix | 2 | 2 | 7 | 7 | 5 | 5 |
| Storage conditions | - | 5°C 2 weeks | 50°C 2 weeks | 5°C 2 weeks | 50°C 2 weeks | 5°C 2 weeks | 50°C 2 weeks |
| Increase of aromatic richness relative to sample stored under same conditions without addition of rhamnosus (Δaromatic richness) | - | 3 | 4.3 | 3 | 4.2 | 3 | 4.5 |

**[Table 4-2]**

| | Units | Test group | | | | | |
|---|---|---|---|---|---|---|---|
| | | 148 | 149 | 150 | 151 | 152 | 153 |
| Fruit juice/vegetable juice | - | Apple juice | | Tomato juice | | Mixed juice | |
| JCM5805 dead bacteria concentration | ×10⁸/L | 2000 | 2000 | 2000 | 2000 | 2000 | 2000 |
| Vegetable juice and/or fruit juice sugar content | °Brix | 2 | 2 | 7 | 7 | 5 | 5 |
| Storage conditions | - | 5°C 2 weeks | 50°C 2 weeks | 5°C 2 weeks | 50°C 2 weeks | 5°C 2 weeks | 50°C 2 weeks |
| Increase of aromatic richness relative to sample stored under same conditions without addition of JCM5805 dead bacteria (Δaromatic richness) | - | 3 | 3.4 | 3 | 3.3 | 3 | 3.5 |

It can be seen from Tables 1-1 to 1-8 that aromatic richness was enhanced in test groups 2 to 10, 12 to 20, 22 to 30, 32 to 40, 42 to 50, 52 to 54, and 55 to 77 where dead beneficial bacteria and at least one of fruit juice and vegetable juice were included and where the concentration of dead beneficial bacteria was 5 × 10⁸/L or more.

It can be seen from Table 2-1 and Table 2-2 that aromatic richness was enhanced in test groups 79, 81, 83, 85, and 86 to 89 where 5 × 10⁸/L or more of dead beneficial bacteria were included and where the sugar content of at least one of fruit juice and vegetable juice was 0.5°Brix or more.

Tables 3-1 to 3-4 indicate that aromatic richness can be enhanced by adjusting the amount of a non-aqueous solvent (specifically, ethanol and/or propylene glycol). Tables 3-1 to 3-4 also indicate that aromatic richness can be enhanced by adjusting the value of [non-aqueous solvent concentration X (ppm)]/[dead bacteria concentration Y × 10⁸/L].

It can be seen from Table 4-1 and Table 4-2 that in test groups 142 to 153 where 5 × 10⁸/L or more of dead beneficial bacteria were included, aromatic richness was enhanced in groups where dead beneficial bacteria were added relative to groups where dead beneficial bacteria were not added in storage at 5°C and 50°C. Moreover, upon comparison of test groups 142 and 143, for example, it can be seen that the effect of imparting aromatic richness was more noticeable in a case in which the storage temperature was 50°C than a case in which the storage temperature was 5°C, even with addition of dead beneficial bacteria in the same concentration.

### INDUSTRIAL APPLICABILITY

According to the present disclosure, it is possible to provide a beverage with enhanced aromatic richness that contains at least one of fruit juice and vegetable juice.

## Claims

1. A beverage comprising:
dead bacteria of beneficial bacteria; and
at least one of fruit juice and vegetable juice, wherein
a dead bacteria concentration of the beneficial bacteria is 5 × 10⁸/L or more.

2. The beverage according to claim 1, wherein the dead bacteria concentration of the beneficial bacteria is 4,000 × 10⁸/L or less.

3. The beverage according to claim 1, wherein the beneficial bacteria are one type or two or more types selected from the group consisting of Lactobacillus bacteria and Lactococcus bacteria.

4. The beverage according to claim 1, wherein the beneficial bacteria are one type or two or more types selected from the group consisting of Lactobacillus rhamnosus CRL1505, Lactococcus lactis subsp. lactis JCM5805, and Lactobacillus paracasei KW3110.

5. The beverage according to claim 1, wherein the fruit juice includes at least one of apple juice, orange juice, and grape juice, and the vegetable juice includes at least one of tomato juice and carrot juice.

6. The beverage according to claim 1, further comprising a non-aqueous solvent, wherein a concentration of the non-aqueous solvent is 1 ppm or more.

7. The beverage according to claim 6, wherein a value of X/Y, given that the concentration of the non-aqueous solvent is taken to be X ppm and the dead bacteria concentration of the beneficial bacteria is taken to be Y × 10⁸/L, is not less than 0.10 and not more than 500.

8. The beverage according to claim 6, wherein the non-aqueous solvent includes at least one of nitrous oxide, acetone, ethanol, glycerin, ethyl acetate, methyl acetate, diethyl ether, cyclohexane, dichloromethane, 1,1,2-trichloroethene, edible oil or fat, 1,1,1,2-tetrafluoroethane, 1-butanol, 2-butanol, 2-butanone, butane, 1-propanol, 2-propanol, propane, propylene glycol, hexane, and methanol.

9. The beverage according to claim 1, wherein the at least one of fruit juice and vegetable juice has a sugar content of 0.5°Brix or more.

10. The beverage according to claim 1, wherein the beverage is a packaged beverage.

11. The beverage according to any one of claims 1 to 10, wherein the beverage is for normal temperature distribution.

12. A method of producing a beverage that contains dead bacteria of beneficial bacteria and at least one of fruit juice and vegetable juice, the method comprising a step of adjusting a dead bacteria concentration of the beneficial bacteria in the beverage to 5 × 10⁸/L or more in blending of the at least one of fruit juice and vegetable juice and the dead bacteria of the beneficial bacteria.

13. The method of producing a beverage according to claim 12, wherein the at least one of fruit juice and vegetable juice that is blended in the step has a sugar content of 0.5°Brix or more.

14. A method of enhancing aromatic richness of a beverage that contains dead bacteria of beneficial bacteria and at least one of fruit juice and vegetable juice, the method comprising adjusting a dead bacteria concentration of the beneficial bacteria in the beverage to 5 × 10⁸/L or more in blending of the at least one of fruit juice and vegetable juice and the dead bacteria of the beneficial bacteria.
